Europäisches Patentamt

European Patent Office

Office européen des brevets

(19)

(11) Veröffentlichungsnummer: **0 268 236 B1**

## EUROPÄISCHE PATENTSCHRIFT

(12)

(45) Veröffentlichungstag der Patentschrift: **20.03.91**

(21) Anmeldenummer: **87116826.6**

(22) Anmeldetag: **14.11.87**

Verbunden mit 87907325.2/0333723
(europäische
Anmeldenummer Veröffentlichungsnummer)
durch Entscheidung vom 21.02.90.

(51) Int. Cl.5: **C08G 63/48,** C08G 63/66,
C09D 167/08

(54) **Lufttrocknende modifizierte Alkydharzbindemittel, Verfahren zu ihrer Herstellung, Überzugsmittel auf der Basis der modifizierten Alkydharzbindemittel sowie deren Verwendung als Bautenanstrichmittel.**

(30) Priorität: **18.11.86 DE 3639471**

(43) Veröffentlichungstag der Anmeldung:
**25.05.88 Patentblatt 88/21**

(45) Bekanntmachung des Hinweises auf die
Patenterteilung:
**20.03.91 Patentblatt 91/12**

(84) Benannte Vertragsstaaten:
**AT BE CH DE ES FR GB IT LI NL SE**

(56) Entgegenhaltungen:
EP-A- 0 167 962
DE-C- 859 952
FR-A- 2 372 201
US-A- 2 459 581
US-A- 3 830 763

PATENT ABSTRACTS OF JAPAN, Band 9, Nr.
119 (C-282)[1842], 23. Mai 1985; JP-A-60 8312
(DAINIPPON INK KAGAKU KOGYO K.K.)
17-01-1985

(73) Patentinhaber: **BASF Lacke + Farben Aktiengesellschaft
Max-Winkelmann-Strasse 80
W-4400 Münster(DE)**

(72) Erfinder: **Pronobis, Jörg
Beethovenstrasse 90
W-5024 Pulheim(DE)**
Erfinder: **Hantschke, Bernhard
Kiebitzweg 6
W-4400 Münster(DE)**
Erfinder: **Reiter, Udo, Dr.
Regerstrasse 22
W-4404 Telgte(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 268 236 B1

**Beschreibung**

Die vorliegende Erfindung betrifft lufttrocknende Alkydharzbindemittel, hergestellt aus trocknenden und/oder halbtrocknenden Fettsäuren, Di- und/oder Polyolen, wobei als Alkoholkomponente Di-Trimethylolpropan und/oder Di-Pentaerythrit verwendet werden, und Polycarbonsäuren, Verfahren zur Herstellung der lufttrocknenden Alkydharzbindemittel, Überzugsmittel auf deren Basis sowie deren Verwendung als Bautenanstrichmittel.

Zum Stand der Technik gehörende Bautenanstrichmittel basieren auf lufttrocknenden Alkydharzen, die aus trocknenden und/oder halbtrocknenden, pflanzlichen oder tierischen Ölen bzw. Fettsäuren gebildet werden. Als Alkoholkomponente werden beispielsweise Pentaerythrit, Trimethylolpropan und Glycerin verwendet. Anteilig können auch Diole mitverwendet werden. Vorzugsweise werden als Säurekomponente aromatische Dicarbonsäuren eingesetzt. Mittels dieser Bindemittel werden Lacke mit Festkörpergehalten bis etwa 70 Gew.-% bei Applikationsviskosität erhalten. Als Lösungsmittel kommen vorwiegend Benzine mit einer Aliphatenfraktion von $140\,^{\circ}C$ bis $200\,^{\circ}C$ in Frage. Derartige bekannte Lacke weisen gute Verarbeitungs- und Trocknungseigenschaften, eine gute Wetterbeständigkeit sowie gute Eigenschaften in bezug auf den Glanz auf. Nachteilig ist jedoch, daß diese Systeme einen Lösungsmittelanteil von mindestens 30 Gew.-% enthalten.

Um den Gehalt an organischen Lösungsmitteln zu reduzieren, wurden wäßrige Alkydharzsysteme entwickelt.

Lacke auf der Basis wasserlöslicher Alkydharze benötigen bis zu 20 Gew.-% flüchtige organische Lösungsmittel, um sich gut verarbeiten zu lassen.

Bei Einsatz wäßriger Dispersionen tritt der Nachteil auf, daß die entstehenden Überzüge nicht glänzend und nicht blockfest genug sind.

Durch Erniedrigung des Molekulargewichts der Bindemittel und durch Einsatz von Thixotropierungsmittel ließen sich sog. High-Solid-Lacke herstellen. Bei diesen festkörperreichen lufttrocknenden Alkydharzen tritt jedoch der Nachteil auf, daß diese Systeme sehr schlecht trocknen.

Das Dimere von Trimethylolpropan, Di-Trimethylolpropan, ein Alkohol mit 4 primären Hydroxylgruppen, wird zur Verwendung in lufttrocknenden Alkydharzen und gesättigten Polyesterharzen empfohlen, wobei Di-Trimethylolpropan einen Teil des Polyolgehaltes ersetzen soll. Bei den zum Stand der Technik gehörenden Alkydharzen, die Di-Trimethylolpropan einkondensiert enthalten, stellt dieser mehrwertige Alkohol jedoch nur bis etwa ein Drittel des gesamten Polyolgehaltes dar. Die Modifizierung mit Di-Trimethylolpropan führt ohne eine Beeinflussung des Härtegrades zu einer erhöhten Flexibilität der entstehenden Überzüge.

Das Dimere von Pentaerythrit, Di-Pentaerythrit, ein Alkohol mit 6 primären Hydroxylgruppen, wird als Rohstoff für Alkydharze für Überzugsmittel und Druckfarben empfohlen.

Vinyl- und acrylmodifizierte Alkydharze sind als Bindemittel für lufttrocknende Lacke bekannt (s. z.B. H. Kittel, Lehrbuch der Lacke und Beschichtungen, Band I, Teil 1, Verlag W.A. Colomb, STuttgart-Berlin 1971, S. 426 ff.). Es handelt sich hierbei um Alkydharze, bei denen vinylgruppenhaltige Monomere, vor allem Styrol, oder Acrylatmonomere in das Alkydharzmolekül eingebaut sind. Sie sind beispielsweise herstellbar durch Umsetzung von Alkydharzen, vorzugsweise unter Verwendung von Katalysatoren, wie z.B. Peroxiden, mit den ethylenisch ungesättigten Monomeren. Der Vorteil der Modifizierung von Alkydharzen mit Vinyl- oder Acrylatmonomeren liegt insbesondere in einer schnelleren Trocknung bzw. Durchtrocknung. Überzugsmittel auf der Basis vinyl- und acrylmodifizierter Alkydharze lassen sich in dicker Schicht ohne Störung auftragen und trocknen nach Sikkativierung in wenigen Stunden. Nachteilig ist in jedem Fall der relativ hohe Anteil an organischen Lösungsmitteln.

Die Aufgabe der vorliegenden Erfindung bestand darin, Bindemittel zur Verfügung zu stellen, die sich zu lufttrocknenden Überzugsmitteln mit einem Festkörpergehalt von mindestens 70 Gew.-% bei Applikationsviskosität verarbeiten lassen. Die resultierenden Überzugsmittel sollten gute Trocknungseigenschaften und insbesondere gute Durchtrocknungseigenschaften bei genügend hohen Schichtdicken haben.

Diese Aufgabe wird überraschenderweise durch lufttrocknende Alkydharzbindemittel der eingangs genannten Art gelöst, die dadurch gekennzeichnet sind, daß sie erhältlich sind aus

a) 40 bis 75 Gew.-% trocknenden und/oder halbtrocknenden Fettsäuren,
b) 15 bis 35 Gew.-% Di- und/oder Polyolen, wobei mindestens 80 Gew.-% der Alkohole aus Di-Pentaerythrit und/oder Di-Trimethylolpropan bestehen,
c) 5 bis 25 Gew.-% Polycarbonsäuren bzw. deren Anhydriden,
d) 0 bis 10 Gew.-% Diisocyanaten,
e) 0 bis 20 Gew.-% Monocarbonsäuren und
f) 2 bis 12 Gew.-% ethylenisch ungesättigten Monomeren,
wobei die Summe der Komponenten a), b), c), d), e) und f) 100 Gew.-% beträgt.

2

EP 0 268 236 B1

Unter Di-Trimethylolpropan bzw. Di-Pentaerythrit sind die Dimeren von Trimethylolpropan bzw. Pentaerythrit zu verstehen, die über 2 Hydroxylgruppen durch eine Ethergruppe miteinander verbunden sind.

Geeignete trocknende und oder halbtrocknenden Fettsäuren, die im allgemeinen 6 bis 24 Kohlenstoffatome pro Molekül aufweisen, sind Sojaölfettsäure, Saflcrölfettsäure, Sonnenblumenölfettsäure, Baumwollsaatölfettsäure, Ricinusölfettsäure, Tallölfettsäure und Leinölfettsäure. Anteilig können selbstverständlich auch nichttrocknende Fettsäuren, wie z.B. Kokosnußölfettsäure, Isononansäure und α-Ethylhexansäure mit verwendet werden.

Als Komponente b) kommen neben Di-Pentaerythrit und Di-Trimethylolpropan, die mindestens 80 Gew.-% der Komponente b) ausmachen sollen, Trimethylolpropan, Glycerin, Ethylenglykol, Pentaerythrit, Neopentylglykol, Propylenglykol, 1,6-Hexandiol, Trimethylolethan, 1,4-Dimethylolcyclohexan, 1,3-Dimethylolcyclohexan, 1,2-Cyclohexandiol sowie 1,4-Cyclohexandiol in Frage.

Geeignete Polycarbonsäuren sind Dicarbonsäuren, wie beispielsweise ortho-Phthalsäure, Terephthalsäure, Tetrahydrophthalsäure Hexahydrophthalsäure, Dimerfettsäuren, Adipinsäure und Acelainsäure.

Es können auch geringe Anteile an höherwertigen Polycarbonsäuren, wie Trimellitsäure, verwendet werden.

Ggf. können auch bis zu 10 Gew.-% Diisocyanate, wie z.B. 2,4-Toluylendiisocyanat, 2,6-Toluylendiisocyanat, Isophorondiisocyanat, Diphenylmethandiisocyanat, Dicyclohexylmethandiisocyanat und Hexamethylen-1,6-diisocyanat mit verwendet werden. Der Einsatz von Diisocyanaten führt zur Bildung von Urethanalkyden.

Geeignete Monocarbonsäuren (Komponente e) sind beispielsweise Benzoesäure, Para-Tertiärbutylbenzoesäure, Abietinsäure, Pivalinsäure, Laurinsäure, Stearinsäure, Cyclopentancarbonsäure und Cyclohexancarbonsäure. Die Monocarbonsäuren können in einem Anteil bis zu 20 Gew.-%, bezogen auf das Gesamtgewicht der Alkydharzbausteine, eingesetzt werden.

Beispiele für geeignete ethylenisch ungesättigte Monomere (Komponente f) sind Styrol, Vinyltoluol, α-Methylstyrol, Divinylbenzol, Acrylsäure, Methacrylsäure, Ester der Malein-und Fumarsäure, Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Methylmethacrylat, Ethylmethacrylat, Propylmethacrylat, Isopropylmethacrylat, Butylmethacrylat, Cyclohexylacrylat, Cyclohexylmethacrylat, Pentylmethacrylat, Isoamylmethacrylat, Hexylmethacrylat, 2-Ethylbutylmethacrylat, Octylmethacrylat, 3,5,5-Trimethylhexylmethacrylat, Decylmethacrylat, Dodecylmethacrylat, Hexadecylmethacrylate, Octadecylmethacrylate, Acrynitril Methacrylnitril, Vinylacetat und Vinylchlorid. Weitere Monomere können eingesetzt werden, sofern sie nicht zu unerwünschten Eigenschaften des Alkydharzes führen.

Durch den Einsatz von Di-Pentaerythrit und oder Di-Trimethylolpropan in dem oben angegebenen Mengenverhältnis gelangt man überraschenderweise zu niedrigviskosen Bindemitteln, die eine sehr gute Löslichkeit in Testbenzin haben, obwohl die Alkydharze relativ hohe Molekulargewichte besitzen. Da die erfindungsgemäßen Bindemittel niedrigviskos sind, lassen sie sich zu Überzugsmitteln mit einem Festkörpergehalt von mindestens 70 Gew.-% bei Applikationsviskosität verarbeiten. Die Viskositäten der 80%igen Lösungen der erfindungsgemäßen Bindemittel in Testbenzin liegen etwa im Bereich von 2,0 bis 12,0 dPa•s. Durch den Einbau von Di-Pentaerythrit und oder Di-Trimethylolpropan in einem hohen Anteil wird erreicht, daß ein hoher Anteil an Fettsäuren eingebaut werden kann, was zu guten Eigenschaften der aus den beschriebenen Bindemitteln erhaltenen Lackfilme führt.

Die modifizierten Alkydharze haben im allgemeinen Säurezahlen von etwa 2 bis 20 mg KOH g und Hydroxylzahlen von etwa 2 bis 100 mg KOH/g.

Durch die Modifizierung mit Vinyl- bzw. Acrylatmonomeren wird eine gute Trocknung der Filme und insbesondere eine gute Durchtrocknung erzielt.

Besonders bevorzugt ist es, wenn die Alkoholkomponente b) zu mehr als 95 Gew.-% aus Di-Pentaerythrit und oder Di-Trimethylolpropan besteht. Selbstverständlich können auch ausschließlich Di-Pentaerythrit und/oder Di-Trimethylolpropan als Alkoholkomponente eingesetzt werden.

Vorteilhafterweise werden als Komponente a) 60 bis 78 Gew.-% trocknende und/oder halbtrocknende Fettsäuren verwendet.

Überraschenderweise stellte sich heraus, daß bei vergleichbarem Molekulargewicht die Bindemittel um so niedrigviskoser sind, je höher der Fettsäureanteil im Alkydharzbindemittel ist.

Die Erfindung betrifft auch ein Verfahren zur Herstellung der erfindungsgemäßen Bindemittel, das dadurch gekennzeichnet ist, daß

a) 40 bis 75 Gew.-% trocknende und oder halbtrocknende Fettsäuren,

b) 15 bis 35 Gew.-% Di- und/oder Polyole, wobei mindestens 80 Gew.-% der Alkohole aus Di-Pentaerythrit und oder Di-Trimethylolpropan bestehen,

3

c) 5 bis 25 Gew.-% Polycarbonsäuren oder deren Anhydride und ggf.

e) bis zu 20 Gew.-% Monocarbonsäuren

in der Schmelze oder in organischem Lösungsmittel bei Temperaturen von 200°C bis 260°C miteinander umgesetzt werden, ggf. noch organisches Lösungsmittel zugefügt wird, ggf. anschließend bei 60°C bis 140°C die Umsetzung mit bis zu 10 Gew.-% Diisocyanaten (d) erfolgt und bei 90°C bis 150°C die Umsetzung mit

f) 2 bis 12 Gew.-% ethylenisch ungesättigten Monomeren

ggf. unter Verwendung eines Polymerisationsinitiators durchgeführt wird, wobei die Summe der Komponenten a), b), c), d), e) und f) 100 Gew.-% beträgt.

Die Alkydharzbildung erfolgt auf dem Wege einer dem Fachmann wohl bekannten Polyveresterungsreaktion. Bei der Additionsreaktion mit Diisocyanaten kann ggf. ein Katalysator für die Urethanbildung verwendet werden. Als ein besonders geeigneter Katalysator für die Polyurethanbildung ist Dibutylzinndilaurat zu nennen.

Vorteilhafterweise besteht in dem erfindungsgemäßen Verfahren die Alkoholkomponente b) zu mehr als 95 Gew.-% aus Di-Pentaerythrit und/oder Di-Trimethylolpropan. Selbstverständlich kann die Alkoholkomponente auch ausschließlich aus Di-Pentaerythrit und Di-Trimethylolpropan bestehen. Besonders vorteilhaft ist es, wenn als Komponente a) 60 bis 78 Gew.-% trocknende und/oder halbtrocknende Fettsäuren verwendet werden.

Geeignete trocknende und/oder halbtrocknende Fettsäuren, die gemäß dem erfindungsgemäßen Verfahren einsetzbar sind, sind Sojaölfettsäure, Saflorölfettsäure, Sonnenblumenölfettsäure, Baumwollsaatölfettsäure, Ricinusölfettsäure, Tallölfettsäure und Leinölfettsäure.

Gemäß dem erfindungsgemäßen Verfahren kommen als Komponente b) neben Di-Pentaerythrit und Di-Trimethylolpropan Trimethylolpropan, Glycerin, Ethylenglykol, Pentaerythrit, Neopentyglykol, Propylenglykol, 1,6-Hexandiol, Trimethylolethan, 1,4-Dimethylolcyclohexan, 1,3-Dimethylolcyclohexan, 1,2-Cyclohexandiol sowie 1,4-Cyclohexandiol in Frage.

Geeignete Polycarbonsäuren sind/Dicarbonsäuren, wie z. B. orto-Phthalsäure, Terephthalsäure, Tetrahydrophthalsäure, Hexahydrophthalsäure, Dimerfettsäuren, Adipinsäure und Acelainsäure.

Geeignete Diisocyanate (Komponente d), Monocarbonsäuren (Komponente e) und ethylenisch ungesättigte Monomere (Komponente f) sind die in Zusammenhang mit dem erfindungsgemäßen Alkydharzbindemittel genannten Komponenten.

Die Erfindung betrifft weiterhin Überzugsmittel mit einem Festkörpergehalt von mindestens 75 Gew.-%, welche die erfindungsgemäßen, zuvor beschriebenen lufttrocknenden, modifizierten Alkydharze als wesentliche Bindemittel sowie ggf. organische Lösungsmittel, Pigmente, Füllstoffe, Hilfsstoffe und Trockenstoffe enthalten. Durch den Einsatz der erfindungsgemäßen Alkydharzbindemittel ist es möglich, Überzugsmittel mit einem hohen Festkörpergehalt, sogenannte "High-Solid-Lacke", herzustellen. Die erfindungsgemäßen Bindemittel führen zu einer Erniedrigung der Viskosität im Vergleich zu bekannten Alkydharzbindemitteln. Vorteilhafterweise weisen die erfindungsgemäßen Überzugsmittel einen Festkörpergehalt im Bereich von 85 bis 100 Gew.-% auf. Es ist also auch mit Hilfe der erfindungsgemäßen lufttrocknenden modifizierten Alkydharze möglich, gut verstreichbare Überzugsmittel ohne Lösungsmittel herzustellen.

Die erfindungsgemäßen Überzugsmittel können ggf. Pigmente, Füllstoffe, Hilfsstoffe und Trockenstoffe enthalten. Als Pigmente kommen sowohl natürliche als auch synthetische, transparente und nichttransparente Pigmente in Frage.

Beispiele für geeignete Trockenstoffe sind Metallsalze (cyclo-)aliphatischer, natürlicher oder synthetischer Säuren, wie z.B. Linolsäure, Naphthensäure und 2-Ethylhexansäure, wobei als geeignete Metalle Kobalt, Mangan, Blei, Zirkon, Calcium und Zink zu nennen sind. Selbstverständlich können auch Mischungen von Sikkativen verwendet werden. Bezogen auf den Metallanteil werden die Trockenstoffe in einem Anteil von $10^{-3}$ bis etwa 3 Gew.-%, bezogen auf den Bindemittelfestkörper, verwendet.

Die Erfindung betrifft auch ein Verfahren zur Herstellung der erfindungsgemäßen Überzugsmittel, bei dem die erfindungsgemäß hergestellten Alkydharzbindemittel sowie ggf. organisches Lösungsmittel sowie Pigmente, Füllstoffe, Hilfsstoffe und Trockenstoffe durch Mischen und ggf. Dispergieren zu einer Überzugsmasse verarbeitet werden.

Die erfindungsgemäßen Überzugsmittel eignen sich insbesondere zur Verwendung als Bautenanstrichmittel. Sie lassen sich in genügend hohen Schichtdicken auftragen und haben gute Trocknungseigenschaften. Hinzu kommt, daß insbesondere auch die Durchtrocknungseigenschaften als sehr gut zu beurteilen sind. Die Filmbildung der Überzugsmittel beruht im wesentlichen auf einer oxidativen Trocknung, im Falle der Verwendung von Lösungsmitteln findet selbstverständlich auch eine physikalische Trocknung statt.

Nachfolgend wird die Erfindung anhand von Ausführungsbeispielen näher erläutert. Teile bedeuten Gewichtsteile, sofern nichts anderes angegeben wird.

Die Versuche werden in einem Reaktor, der wie folgt ausgelegt ist, durchgeführt: Der Reaktor besteht aus einem Rührwerk, einer Stickstoffzufuhrleitung sowie einer Trennvorlage, die über einen Kühler das azeotrope Gemisch von Aromaten und Wasser trennt. Er kann elektrisch, induktiv oder durch Wärmeträgeröl beheizt werden. Die Temperaturführung erfolgt über ein Thermometer, das die Arbeitsguttemperatur regelt. Die Kondensationsreaktion wird in bekannter Weise durchgeführt. Zur Polymerisation der ethylenisch ungesättigten Monomeren muß der Reaktor mit einem Vormischbehälter und einem Initiatorzulaufgefäß ausgestattet werden.

I. Herstellung der modifizierten Alkydharzbindemittel

Beispiel 1

Aus 704 Teilen einer trocknenden Fettsäure, 28 g paraTertiärbutylbenzoesäure, 178 Teilen Di-Pentaerythrit, 9,5 Teilen Diethylenglykol, 53,4 Teilen Phthalsäureanhydrid, 60,1 Teilen Isophthalsäure und 34 Teilen Ethylhexylacrylat wurde ein acrylatmodifiziertes Alkydharzbindemittel hergestellt, wobei als Initiator 0,8% para-Tertiärbutylperoxyd bei einer Polymerisationstemperatur von 140° C verwendet wurde.

```
Kennzahlen:

Fettsäuregehalt               70 %
Säurezahl                     5 mg KOH/g
Hydroxylzahl                  20 mg KOH/g
Feststoffgehalt               80 % in Testbenzin
Viskosität
  (80%ig in Testbenzin)       7,5 dPa·s
Mittleres Molekulargewicht    9.450
```

Beispiel 2

Aus 708 Teilen einer Mischung aus trocknenden und halbtrocknenden Fettsäuren, 180 Teilen Di-Pentaerythrit, 28 Teilen Kolophonium, 50 Teilen Phthalsäureanhydrid, 56 Teilen Isophthalsäure, 35 Teilen Butylacrylat und 7 Teilen Styrol wurde ein modifiziertes Alkydharzbindemittel hergestellt.
Initiator: 0,8 % para-Tertiärbutylperoxid
Polymerisationstemperatur: 140° C

```
Kennzahlen:

Fettsäuregehalt               71 %
Säurezahl                     7 mg KOH/g
Hydroxylzahl                  20 mg KOH/g
Feststoffgehalt               80 % in Testbenzin
Viskosität
  (80%ig in Testbenzin)       10 dPa·s
Mittleres Molekulargewicht    24.100
```

II. Lackformulierung

Aus 59,0 Teilen des im Beispiel 1 hergestellten modifizierten Alkydharzbindemittels (85%ig), 1,5 Teilen einer 10%igen Bentone-Paste, 1,0 Teilen Calciumoctoat (6%ig), 36,0 Teilen Titandioxid, 0,3 Teilen Sojalecithin, 0,5 Teilen Bariumoctoat (6%ig), 1,0 Teilen Kobaltoctoat (6%ig), 0,5 Teilen Zirkoniumoctoat (6%ig), 0,5 Teilen eines Hautverhütungsmittels, 0,5 Teilen Siliconöl und 1,0 Teilen Testbenzin wird ein hochglänzender Weißlack hergestellt. Der Feststoffgehalt beträgt 85 %.

Im folgenden werden Eigenschaften dieses glänzenden Weißlacks angegeben:

| Viskosität | 7dPa s |
|---|---|
| Festkörper | 85 % |
| Verarbeitung | 1 |
| Verlauf | 1 |
| Glanz | 90 |
| Fülle | 1 |
| Deckfähigkeit | 1-2 |

Druckfestigkeit über Nacht i.0.
Runzelbildung -
Laufneigung -
Die Bewertung bezieht sich auf die Noten 1-6, wobei die Note 1 die beste Note ist.

**Ansprüche**

1. Lufttrocknende Alkydharzbindemittel, hergestellt aus trocknenden und/oder halbtrocknenden Fettsäuren, Polyolen, wobei als Alkoholkomponente Di-Trimethylolpropan und/oder Di-Pentaerythrit verwendet werden, und Polycarbonsäuren, dadurch gekennzeichnet, daß die Alkydharze erhältlich sind aus
   a) 40 bis 75 Gew.-% trocknenden und/oder halbtrocknenden Fettsäuren,
   b) 15 bis 35 Gew.-% Polyolen, wobei mindestens 80 Gew.-% der Alkohole aus Di-Pentaerythrit und/oder Di-Trimethylolpropan bestehen,
   c) 5 bis 25 Gew.-% Polycarbonsäuren bzw. deren Anhydriden,
   d) 0 bis 10 Gew.-% Diisocyanaten,
   e) 0 bis 20 Gew.-% Monocarbonsäuren und
   f) 2 bis 12 Gew.-% ethylenisch ungesättigten Monomeren, wobei die Summe der Komponenten a), b), c), d), e) und f) 100 Gew.-% beträgt.

2. Verfahren zur Herstellung lufttrocknender Alkydharzbindemittel gemäß Anspruch 1, hergestelle aus trocknenden und/oder halbtrocknenden Fettsäuren, Polyolen, wobei als Alkoholkomponente Di-Trimethylolpropan und/oder Di-Pentaerythrit verwendet werden, und Polycarbonsäuren, dadurch gekennzeichnet, daß
   a) 40 bis 75 Gew.-% trocknende und/oder halbtrocknende Fettsäuren,
   b) 15 bis 35 Gew.-% Polyole, wobei mindestens 80 Gew.-% der Alkohole aus Di-Pentaerythrit und/oder Di-Trimethylolpropan bestehen,
   c) 5 bis 30 Gew.-% Polycarbonsäuren oder deren Anhydride und ggf.
   d) bis zu 20 Gew.-% Monocarbonsäuren in der Schmelze oder in organischem Lösungsmittel bei Temperaturen von 200°C bis 260°C miteinander umgesetzt werden, ggf. noch organisches Lösungsmitel zugefügt wird, ggf. anschließend bei 60°C bis 140°C die Umsetzung mit bis zu 10 Gew.-% Diisocyanaten (d) erfolgt und bei 90°C bis 150°C die Umsetzung mit
   f) 2 bis 12 Gew.-% ethylenisch ungesättigten Monomeren ggf unter Verwendung eines Polymerisationsinitiators durchgeführt wird, wobei die Summe der Komponenten a), b), c), d), e) und f) 100 Gew.-% beträgt.

3. Alkydharzbindemittel oder Verfahren nach Anspruch 1 oder 2, dadurch gekennzeichnet, daß die Alkoholkomponente b) zu mehr als 95 gew.-% aus Di-Pentaerythrit und/oder Di-Trimethylolpropan besteht.

4. Alkydharzbindemittel oder Verfahren nach Anspruch 1 bis 3, dadurch gekennzeichnet, daß als Komponente a) 60 bis 75 Gew.-% trocknende und/oder halbtrocknende Fettsäuren verwendet werden.

5. Überzugsmittel mit einem Festkörpergehalt von mindestens 75 Gew.-%, enthaltend als wesentliches Bindemittel das Alkydharzbindemittel nach Anspruch 1 und 3 bis 4 sowie ggf. organisches Lösungsmittel sowie Pigmente, Füllstoffe, Hilfsstoffe und Trockenstoffe.

6. Überzugsmittel nach Anspruch 5, dadurch gekennzeichnet, daß es einen Festkörpergehalt im Bereich von 85 bis 100 Gew.-% hat.

7. Verfahren zur Herstellung eines Überzugsmittels mit einem Festkörpergehalt von mindestens 75 Gew.-%, wobei das nach dem Verfahren nach Anspruch 2 bis 4 hergestellte Alkydharzbindemittel sowie ggf. organisches Lösungsmittel sowie Pigmente, Füllstoffe, Hilfsstoffe und Trockenstoffe durch Mischen und ggf. Dispergieren zu einer Überzugsmasse verarbeitet werden.

8. Verwendung der Überzugsmittel nach Anspruch 5 und 6 als lufttrocknende Bautenanstrichmittel.


## Claims

1. Air-drying alkyd resin binders, prepared from drying and/or semi-drying fatty acids, polyols in which di-trimethylolpropane and/or di-pentaerythritol are used as the alcohol component, and polycarboxylic acids, characterized in that the alkyd resins can be obtained from
   a) 40 to 75% by weight of drying and/or semi-drying fatty acids,
   b) 15 to 35% by weight of polyols in which at least 80% by weight of the alcohols are composed of di-pentaerythritol and/or di-trimethylolpropane,
   c) 5 to 25% by weight of polycarboxylic acids or anhydrides thereof,
   d) 0 to 10% by weight of diisocyanates,
   e) 0 to 20% by weight of monocarboxylic acids and
   f) 2 to 12% by weight of ethylenically unsaturated monomers,
   the total of components a), b), c), d), e) and f) amounting to 100% by weight.

2. Process for the preparation of air-drying alkyd resin binders according to Claim 1, prepared from drying and/or semi-drying fatty acids, polyols in which ditrimethylolpropane and/or di-pentaerythritol are used as the alcohol component, and polycarboxylic acids, which is characterized in that
   a) 40 to 75% by weight of drying and/or semi-drying fatty acids,
   b) 15 to 35% by weight of polyols in which at least 80% by weight of the alcohols are composed of di-pentaerythritol and/or di-trimethylolpropane,
   c) 5 to 25% by weight of polycarboxylic acids or anhydrides thereof and, if appropriate,
   e) up to 20% by weight of monocarboxylic acids are reacted with one another at temperatures of $200°C$ to $260°C$, in the melt or in an organic solvent, if appropriate organic solvent is also added, if appropriate the reaction with up to 10% by weight of diisocyanates (d) is then carried out at $60°C$ to $140°C$, and the reaction with
   f) 2 to 12% by weight of ethylenically unsaturated monomers
   is carried out at $90°C$ to $150°C$, if appropriate using a polymerization initiator, the total of the components a), b), c), d), e) and f) amounting to 100% by weight.

3. Alkyd resin binders or processes according to Claim 1 or 2, characterized in that the alcohol component b) is composed of more than 95% by weight of di-pentaerythritol and/or di-trimethylolpropane.

4. Alkyd resin binders or processes according to Claim 1 to 3, characterized in that 60 to 75% by weight of drying and/or semi-drying fatty acids are used as the component a).

5. Coating agents having a solids content of at least 75% by weight and containing, as the essential binder, the alkyd resin binder according to Claim 1 and 3 to 4 and also, if appropriate, organic solvent and pigments, fillers, auxiliaries and driers.

6. Coating agent according to Claim 5, characterized in that it has a solids content within the range from 85 to 100% by weight.

**Revendications**

1. Liants de résines alkydes séchant à l'air, fabriqués à partir d'acides gras siccatifs et/ou demisiccatifs, de polyols, où sont utilisés, comme composant alcool, le di-triméthylolpropane et/ou le di-pentaérythritol, et d'acides polycarboxyliques, caractérisés par le fait que les résines alkydes peuvent être obtenues à partir de :
   (a) 40 à 75% en poids d'acides gras siccatifs et/ou demisiccatifs
   (b) 15 à 35% en poids de polyols, où au moins 80% en poids des alcools se composent de di-pentaérythritol et/ou de di-triméthylolpropane,
   (c) 5 à 25% en poids d'acides polycarboxyliques ou de leurs anhydrides,
   (d) 0 à 10% en poids de diisocyanates,
   (e) 0 à 20% d'acides monocarboxyliques, et
   (f) 2 à 12% en poids de monomères à insaturation éthylenique,
   la somme des composants (a), (b), (c), (d), (e) et (f) s'élevant à 100% en poids.

2. Procédé de fabrication de liants de résines alkydes séchant à l'air selon la revendication 1, fabriqués à partir d'acides gras siccatifs et/ou demi-siccatifs, de polyols, où sont utilisés, comme composant alcool, le ditriméthylolpropane et/ou le di-pentaérythritol, et d'acides polycarboxyliques, caractérisé par le fait que l'on fait réagir ensemble, dans la masse en fusion ou dans un solvant organique, à des températures allant de 200°C à 260°C,
   (a) 40 à 75% en poids d'acides gras siccatifs et/ou demisiccatifs,
   (b) 15 à 35% en poids de polyols, où au moins 80% en poids des alcools se composent de di-pentaérythritol et/ou de di-triméthylolpropane,
   (c) 5 à 25% en poids d'acides polycarboxyliques ou de leurs anhydrides, et, le cas échéant,
   (e) jusqu' à 20% en poids d'acides monocarboxyliques, on ajoute le cas échéant encore du solvant organique, puis, le cas échéant, à une température de 60°C à 140°C, a lieu la réaction avec jusqu'à 10% en poids de diisocyanates (d), et, à une température de 90°C à 150°C, on conduit la réaction avec
   (f) 2 à 12% en poids de monomères à insaturation éthylénique, le cas échéant avec utilisation d'un initiateur de polymérisation, la somme des composants (a), (b), (c), (d), (e) et (f) s'élevant à 100% en poids.

3. Liants de résines alkydes ou procédé selon la revendication 1 ou 2, caractérisé(s) par le fait que le composant alcool (b) se compose, jusqu' à plus de 95% en poids, de di-pentaérythritol et/ou de di-triméthylolpropane.

4. Liants de résines alkydes ou procédé selon l'une des revendications 1 à 3, caractérisé(s) par le fait que, comme composant (a), sont utilisés 60 à 75% en poids d'acides gras siccatifs et/ou semi-siccatifs.

5. Agent de revêtement ayant une teneur en corps solides d'au moins 75% en poids, renfermant, comme liant essentiel, le liant de résine alkyde selon l'une des revendications 1 et 3 à 4, de même que, le cas échéant, un solvant organique, ainsi que des pigments, des charges, des adjuvants et des siccatifs.

6. Agent de revêtement selon la revendication 5, caractérisé par le fait qu'il a une teneur en corps solides se situant dans la plage allant de 85 à 100% en poids.